# EUROPEAN PATENT APPLICATION

(11) **EP 3 540 676 A1**
(43) Date of publication of application: **18.09.2019**
(21) Application number: 17869058.2
(22) Date of filing: 27.10.2017
(51) Int. Cl.: G06Q 30/06, G06Q 50/10

(54) **LEASED VEHICLE POOL USE SYSTEM**

(30) Priority: 10.11.2016 JP 2016219965
(71) Applicant: G Holdings Co., Ltd, Nagoya city, Aichi 460-0017 (JP); Goto, Zengo, Nagoya city, Aichi 466-0811 (JP)
(72) Inventor: GOTO Zengo, Nagoya city Aichi 466-0811 (JP); MUKAI Shunsuke, Musashino city Tokyo 180-0001 (JP)
(74) Representative: Erhardt, Martin
(86) International application number: PCT/JP2017/038939
(87) International publication number: WO 2018/088249

(57) **Abstract**

[Problem] To provide a leased-vehicle pooling system which implements pooling of a vehicle used for car lease so as to improve an operating rate per vehicle and can reduce a lease fee per person.

[Solution] A leased-vehicle pooling system having : a pooler information retaining unit for retaining vehicle identification information of the leased vehicle and pooler identification information for two or more poolers of the leased vehicle in association with each other; a vehicle running-related information acquisition unit for acquiring vehicle running-related information including the vehicle identification information, the pooler identification information of either one of the two or more vehicle poolers, and vehicle running information of the leased vehicle; a lease-fee calculation rule retaining unit for retaining a calculation rule for a lease fee to be charged to each of the poolers on the basis of the received vehicle running-related information; a lease-fee calculation rule acquisition unit for acquiring the lease-fee calculation rule; and a lease-fee calculation unit for calculating the lease fee to be charged to each of the poolers on the basis of the received running-related information and the acquired lease-fee calculation rule.

## Description

### Technical Field

The present invention relates to a leased-vehicle pooling system and relates to a leased-vehicle pooling system suitable for improvement of an operating rate of the leased vehicle.

### Background Art

Conventionally, costs for owning an automobile are high. In addition to a vehicle price, an automobile tax, an automobile liability insurance, a voluntary insurance and the like, costs for automobile inspection once every predetermined years, costs for a parking lot, costs for inspection/repair, gasoline costs and the like are incurred.

On the other hand, an operating rate of an automobile is extremely low. In the case of a private car, assuming that a so-called "Sunday driver" uses a car for 8 hours per day, the operating rate is approximately 4.7% per year at the most. Similarly, assuming that a company owned car is used 240 days a year at a rate of 9-hour operation per day, the operation rate is only 24%.

Under the circumstances above, motivation to own an automobile has become lower in recent years, and there are people who prefer use of an automobile only in a required time slots. As a result, rent-a-cars and car sharing have been used and spread.

In the case of juridical persons, more and more corporations select car leasing or use rent-a-cars in order to put costs for owning and using the automobiles down to expenses.

Patent Document 1 discloses a vehicle managing apparatus configured such that, when one vehicle is used for a company and a private use, running situations of each of the company use and the private use can be recorded in a simple way.

Patent Document 2 discloses a vehicle rental management system which can realize fair cost bearing by accurately deriving a shared rent for each use type in a case where there is a plurality of use types for one vehicle for rent.

### Prior Art Documents

### Patent Documents

Patent Document 1: Japanese Patent Laid-Open No. JP- 2009-217759A
Patent Document 2: Japanese Patent Laid-Open No. JP- 2007-114854A

### Summary of Invention

### Technical Problem

In the Road Transportation Act in 2005 and before, Clause 1, Article 79 provided for that "those who want to pool a private automobile should obtain permission from the Minister of Land, Infrastructure and Transport" and a single private automobile could be pooled by permission.

The act was revised in 2006, and the description about the pooling was deleted. Deleting the description means only that the permission system was abolished, and the pooling was not abolished. Article 80 of the Road Transportation Act revised in 2006 provides for that "the private automobile should not be lent for a fee in the course of trade without permission from the Minister of Land, Infrastructure and Transport. However, this shall not apply to a case where the lessee is a user of the automobile." The "user" in this act refers to those described in the column of the user in a motor vehicle inspection certificate. On the other hand, if the permission from the Minister of Land, Infrastructure and Transport is obtained, one can lend a private car for a fee to those who are not in the above-described relation. This onerous lending refers to a case of rent-a-car, but the name of a person who obtained the permission from the Minister of Land, Infrastructure and Transport needs to be entered in the column of the user in the motor vehicle inspection certificate of the private automobile which can be lent for a fee. In this case of rent-a-car, a plurality of lessees for one lessor is legally allowed explicitly.

In turn, the case provided for in Article 80 of the Road Transportation Act after the revision is considered here again. When an owner of a private automobile is to lease the private automobile to others, one-to-one leasing has been conducted because only one user name could be entered in the column of the user in the motor vehicle inspection certificate.

When the inventor inquired at the Ministry of Land, Infrastructure and Transport about the car sharing between individuals, it was found that the car sharing between the individuals is not the onerous lending from an owner to a user under Article 80 of the Road Transportation Act but is based on the pooling of the private automobile. With regard to the pooling of the private automobile, the permission system was abolished by the revision of the Road Transportation Act in 2006, but according to the "Control against Violation in Use of the Private Automobile and Interpretation and Operation of the Road Transportation Act Relating Thereto" (the Passenger Vehicle Transportation Business No. 1529/the Motor Truck Transportation Business No. 256 as of July 10, 1959), it referred to the use of the same automobile by each of two or more persons from independent standpoints in order to satisfy their own needs.

As requirements for use from the independent standpoints, the followings are needed:
(1) The poolers are specifically identified:
(2) Agreement among the poolers is present with regard to use/management of the automobile; and
(3) The agreement contents require that each of the poolers has substantial authorities and responsibilities with regard to the use/management of the automobile.

These are requirements required for a leasing company who is substantially an owner of a vehicle.

In view of these circumstances, the inventor has invented an efficient vehicle pooling system which can implement car-leasing for a plurality of users.

In the case of car-leasing, a leasing fee is based on costs for maintenance, costs for automobile inspection, various taxes and the like as well as interests during the leasing period, depreciation costs and the like in addition to the price of the automobile body, and as a result, an annual cost required for an automobile becomes high.

In the case of rent-a-car, a use unit price is determined by calculation similar to the above, but payment is made for using period. Therefore, a rent-a-car cost is not necessarily higher than a cost for owning a private car. However, cumbersomeness in procedure transacted with a rent-a-car company at each use is unavoidable, and a car of a desired vehicle model is not always available for rent.

In the case of car sharing, it has convenience of usability as long as a car is available except the need of initial procedure related to user registration. However, it does not necessarily guarantee that a car of a desired vehicle model can be used anytime.

In order to solve the aforementioned conventional problems, the present invention has an object to provide a leased-vehicle pooling system which implements pooling of a vehicle used for car lease so as to improve an operating rate per vehicle and can reduce a lease fee per person by bearing the lease fee by a plurality of persons. Moreover, the present invention has an object to provide a system which can smoothly perform a duty imposed on a leasing company (owner of a private car) under the Road Transportation Act to the leasing company or a company in charge of information processing of a leasing operation on behalf of the leasing company.

Another object of the present invention is to provide a leased-vehicle pooling system capable of an efficient operation of a leasing company even if there are various vehicle models of the leased vehicles such as gasoline vehicles, electric vehicles, hybrid vehicles, and fuel cell vehicles.

### Solution to Problem

In order to solve the aforementioned problems, the present invention provides the following pooling system of a leased vehicle and the like. That is, as a first invention, the present invention provides a leased-vehicle pooling system having a vehicle management server comprising:
a pooler information retaining unit for retaining vehicle identification information of the leased vehicle and pooler identification information for two or more poolers of the leased vehicle in association with each other;
a vehicle running-related information acquisition unit for acquiring vehicle running-related information including the vehicle identification information, the pooler identification information of either one of the two or more vehicle poolers, and vehicle running information of the leased vehicle;
a lease-fee calculation rule retaining unit for retaining a lease-fee calculation rule which is a rule for calculating a lease fee to be charged to each of the poolers on the basis of the received vehicle running-related information;
a lease-fee calculation rule acquisition unit for acquiring the lease-fee calculation rule; and
a lease-fee calculation unit for calculating the lease fee to be charged to each of the poolers on the basis of the received running-related information and the acquired lease-fee calculation rule.

In addition to the aforementioned features, the present invention provides a leased-vehicle pooling system having a vehicle management server comprising:
a pooler information retaining unit for retaining vehicle identification information of a leased vehicle, leased-vehicle-owner identification information, and pooler identification information for two or more poolers of the leased vehicle in association with each other;
a vehicle running-related information acquisition unit for acquiring vehicle running-related information including the vehicle identification information, the leased-vehicle-owner identification information, the pooler identification information of either one of the two or more vehicle poolers, and vehicle running information of the leased vehicle;
a lease-fee calculation rule retaining unit for retaining a lease-fee calculation rule which is a rule for calculating a lease fee to be charged to each of the poolers on the basis of the received vehicle running-related information;
a lease-fee calculation rule acquisition unit for acquiring the lease-fee calculation rule; and
a lease-fee calculation unit for calculating the lease fee to be charged to each of the poolers on the basis of the received running-related information and the acquired lease-fee calculation rule.

In addition to the aforementioned features, the present invention provides the leased-vehicle pooling system in which the pooler information retaining unit retains written-agreement identification information in further association, which is identification information of a document (including electronic documents) relating to an agreement made among the poolers identified by the pooler identification information on use/management of the leased vehicle identified by the vehicle identification information associated with the pooler identification information.

In addition to the aforementioned features, the present invention provides the leased-vehicle pooling system in which the lease-fee calculation rule acquisition unit has lease-fee-by-vehicle calculation rule acquisition means for acquiring the lease-fee calculation rule by using the vehicle identification information.

In addition to the aforementioned features, the present invention provides the leased-vehicle pooling system in which the lease-fee calculation rule acquisition unit has lease-fee-by-pooler calculation rule acquisition means for acquiring the lease-fee calculation rule by using the pooler identification information.

In addition to the aforementioned features, the present invention provides the leased-vehicle pooling system in which the lease-fee calculation rule acquisition unit has lease-fee-by-vehicle-owner calculation rule acquisition means for acquiring the lease-fee calculation rule by using the vehicle-owner identification information.

In addition to the aforementioned feature, the present invention provides the leased-vehicle pooling system having a vehicle management server further having a lease-fee calculation result output unit for outputting information related to the calculated lease fee to a terminal apparatus used by the vehicle poolers.

In addition to the aforementioned feature, the present invention provides the leased-vehicle pooling system further having an onboard apparatus having:
a vehicle running information acquisition unit for acquiring vehicle running information from the leased vehicle;
a pooler identification information acquisition unit for acquiring pooler identification information for identifying which of the poolers a user of the leased vehicle is;
a vehicle running-related information retaining unit for retaining the acquired pooler identification information and the vehicle running information when the pooler identified by the pooler identification information is using the leased vehicle in association with each other as vehicle running-related information; and
a first vehicle running-related information output unit for outputting the retained vehicle running-related information to the vehicle management server.

In addition to the aforementioned feature, the present invention provides the leased-vehicle pooling system in which the vehicle running information acquisition unit of the onboard apparatus has a vehicle running-distance information acquisition means for acquiring vehicle running-distance information from the leased vehicle and/or a vehicle running-duration information acquisition means for acquiring vehicle operation-duration information which is information for determining a vehicle operation duration from the vehicle.

In addition to the aforementioned feature, the present invention provides the leased-vehicle pooling system in which the onboard apparatus further has:
an authentication information retaining unit for retaining authentication information for authenticating the pooler identification information;
an authentication unit for authenticating the acquired pooler identification information by the retained authentication information;
an authentication result output unit for outputting an authentication result in the authentication unit; and
a processing initiation unit for making the pooler identification information usable as the pooler identification information only when the output authentication result is positive.

In addition to the aforementioned feature, the present invention provides the leased-vehicle pooling system in which the onboard apparatus further has an authentication-unit management unit for managing the authentication unit.

In addition to the aforementioned feature, the present invention provides the leased-vehicle pooling system further having a portable terminal apparatus for authentication having: the authentication information retaining unit for retaining the authentication information; and the authentication information output unit for outputting the retained authentication information to the onboard apparatus.

In addition to the aforementioned feature, the present invention provides the leased-vehicle pooling system in which the portable terminal apparatus for authentication further has: a vehicle running-related information acquisition unit for acquiring vehicle running-related information output from a vehicle running-related information output unit; and a second vehicle running-related information output unit for outputting the acquired vehicle related information to the vehicle management server.

In addition to the aforementioned feature, the present invention provides the leased-vehicle pooling system further having:
a vehicle-owner-identification-information authentication information retaining unit for retaining vehicle-owner-identification-information authentication information which is information for authenticating the vehicle-owner identification information;
a vehicle-owner identification information acquisition unit for acquiring the vehicle-owner identification information;
a vehicle-owner identification information authentication unit for authenticating the acquired vehicle-owner identification information by the retained vehicle-owner-identification-information authentication information;
an authentication result output unit for outputting an authentication result; and
an authentication-unit-management-unit control unit functioning the authentication-unit management unit only when the output authentication result is positive.

In addition to the aforementioned feature, the present invention provides the leased-vehicle pooling system further having a pooler-information-retaining-unit management unit for managing the pooler information retaining unit.

In addition to the aforementioned feature, the present invention provides the leased-vehicle pooling system in which the vehicle management server further has an output unit to a portable terminal of a pooler which transmits the authentication information and authentication information output unit generation information which is information for causing a computer in the portable terminal apparatus to generate an authentication information output unit for outputting this authentication information to the onboard apparatus to the portable terminal apparatus of the pooler identified by the pooler identification information retained in the pooler information retaining unit so as to use the portable terminal apparatus of the pooler as a portable terminal apparatus for authentication.

As a second invention, the present invention provides an operation method of a leased-vehicle pooling system comprising an operation method of a vehicle management server of the leased-vehicle pooling system consisting of:
a vehicle running-related information acquisition step for acquiring vehicle running-related information including vehicle identification information of a leased vehicle, pooler identification information of either one of the two or more vehicle poolers of the leased vehicle, and vehicle running information of the leased vehicle;
a lease-fee calculation rule acquisition step for acquiring a lease-fee calculation rule; and
a lease-fee calculation step for calculating a lease fee to be charged to each of the poolers on the basis of the received running-related information and the acquired lease-fee calculation rule.

As a third invention, the present invention provides an operation program of a leased-vehicle pooling system comprising an operation program readable and executable by a vehicle management server of the leased-vehicle pooling system, the vehicle management server being a computer, and the operation program readable and executable by the vehicle management server consisting of:
a vehicle running-related information acquisition step for acquiring vehicle running-related information including vehicle identification information of a leased vehicle, pooler identification information of either one of the two or more vehicle poolers of the leased vehicle, and vehicle running information of the leased vehicle;
a lease-fee calculation rule acquisition step for acquiring a lease-fee calculation rule; and
a lease-fee calculation step for calculating a lease fee to be charged to each of the poolers on the basis of the received running-related information and the acquired lease-fee calculation rule.

With the aforementioned configuration, the present invention can provide a leased-vehicle pooling system which implements pooling of a vehicle used for car lease so as to improve an operating rate per vehicle and can reduce a lease fee per person by bearing the lease fee by a plurality of persons. Moreover, the present invention can provide a system which can smoothly perform a duty imposed on a leasing company (owner of a private car) under the Road Transportation Act to the leasing company or a company in charge of information processing of a leasing operation on behalf of the leasing company. The present invention can also provide a leased-vehicle pooling system capable of an efficient operation of a leasing company even if there are various vehicle models of the leased vehicles such as gasoline vehicles, electric vehicles, hybrid vehicles, and fuel cell vehicles.

### Brief Description of Drawings

Figure 1 is a conceptual diagram illustrating an example of a lased-vehicle pooling system according to an embodiment 1.
Figure 2 is a conceptual diagram illustrating another example of the lased-vehicle pooling system according to the embodiment 1.
Figure 3 is a functional block diagram illustrating an example of a lased-vehicle pooling system according to the embodiment 1.
Figure 4 is a functional block diagram illustrating an example of a lased-vehicle pooling system according to the embodiment 1.
Figure 5 is a block diagram of a pooler information retaining unit.
Figure 6 is a block diagram of the pooler information retaining unit.
Figure 7 is a block diagram of a lease-fee calculation rule acquisition unit.
Figure 8 is a block diagram of the lease-fee calculation rule acquisition unit.
Figure 9 is a block diagram of the lease-fee calculation rule acquisition unit.
Figure 10 is a diagram illustrating an example in which a lease-fee calculation result of a vehicle management server is output to a terminal apparatus used by a user.
Figure 11 is a diagram for explaining operations to obtain vehicle running information and pooler identification information in an onboard apparatus.
Figure 12 is a functional block diagram of a vehicle running information acquisition unit of the onboard apparatus.
Figure 13 is a functional block diagram for explaining an authentication operation by the onboard apparatus.
Figure 14 is a functional block diagram of an authentication-unit management unit for making addition, deletion, change, update and the like to an authentication information retaining unit of the onboard apparatus.
Figure 15 is a functional block diagram for explaining a relationship between acquisition of vehicle running-related information and an authentication operation in the onboard apparatus.
Figure 16 is a functional block diagram of a portable terminal apparatus for authentication.
Figure 17 is a functional block diagram for explaining acquisition of the vehicle running-related information by the portable terminal apparatus for authentication.
Figure 18 is a functional block diagram for explaining pooling by using vehicle-owner-identification-information authentication information.
Figure 19 is a diagram illustrating an example in which a pooler-information-retaining-unit management unit is provided in a vehicle management server.
Figure 20 is a diagram illustrating an example in which an output unit to a portable terminal of a pooler is provided in the vehicle management server.
Figure 21 is a flowchart illustrating an example of a pooling method of a leased vehicle according to an embodiment 2.
Figure 22 is a diagram illustrating an example of hardware configuration of a leased-vehicle pooling system according to the embodiment 2.
Figure 23 is a diagram for explaining a pooler and a lease-fee calculation rule.
Figure 24 is a diagram illustrating an example of a pooling mode of the leased vehicle.
Figure 25 is a relational table of vehicle identification information, vehicle pooler identification information and lease-fee calculation rule identification information.
Figure 26 is a diagram for explaining an operation of an application of a vehicle pooling system application of the leased vehicle.
Figure 27 is a diagram illustrating an example of an operation screen of the vehicle pooling system application of the leased vehicle.
Figure 28 is a diagram illustrating an example of a pooling management screen of a vehicle server.

### Reference Numerals

- 0300, 0400: Leased-vehicle
- 0301, 0401: Onboard apparatus
- 0305, 0405: Vehicle running information acquisition unit
- 0306, 0406: Pooler identification information acquisition unit
- 0321, 0421: Pooler information retaining unit
- 0322, 0422: Vehicle running-related information acquisition unit
- 0323, 0423: lease-fee calculation rule retaining unit
- 0324, 0424: lease-fee calculation rule acquisition unit
- 0325, 0425: lease-fee calculation unit
- 0500, 0600: Pooler information retaining unit
- 0501, 0601: Vehicle identification information
- 0502, 0603: Pooler identification information
- 0602: Vehicle-owner identification information
- 0503, 0604: Written-agreement identification information
- 0700, 0800, 0900: Lease-fee calculation rule acquisition unit
- 0710: Lease-fee-by-vehicle calculation rule acquisition means
- 0711, 0712, 071n: Lease-fee calculation rule
- 0810: Lease-fee-by-pooler calculation rule acquisition means
- 0811, 0812, 081n: Lease-fee calculation rule
- 0910: Lease-fee-by-vehicle-owner calculation rule acquisition means
- 0911, 0912, 091n: Lease-fee calculation rule

### Description of Embodiments

Hereinafter, embodiments of the present invention will be described by using the attached drawings. It should be noted that the present invention is not limited to these embodiments but can be implemented in various forms without departing from the gist thereof.

### <Embodiment 1>

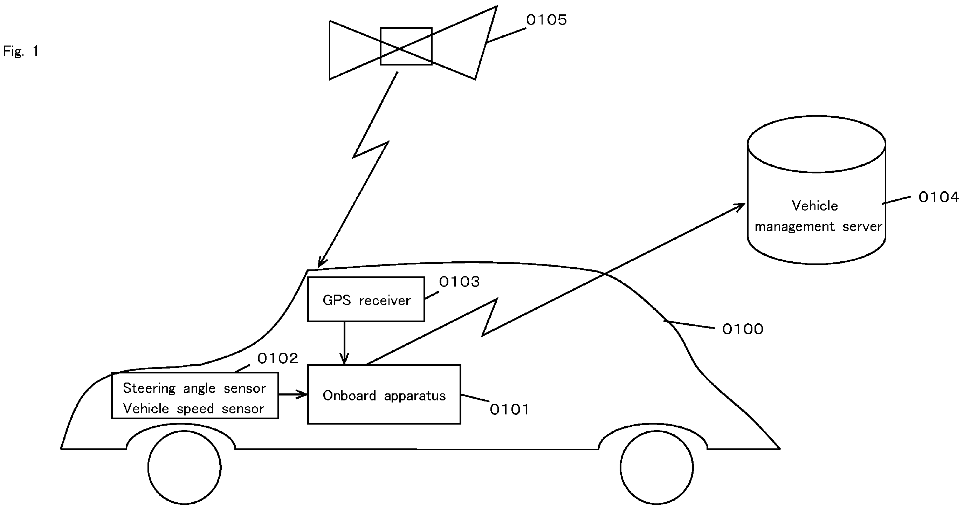

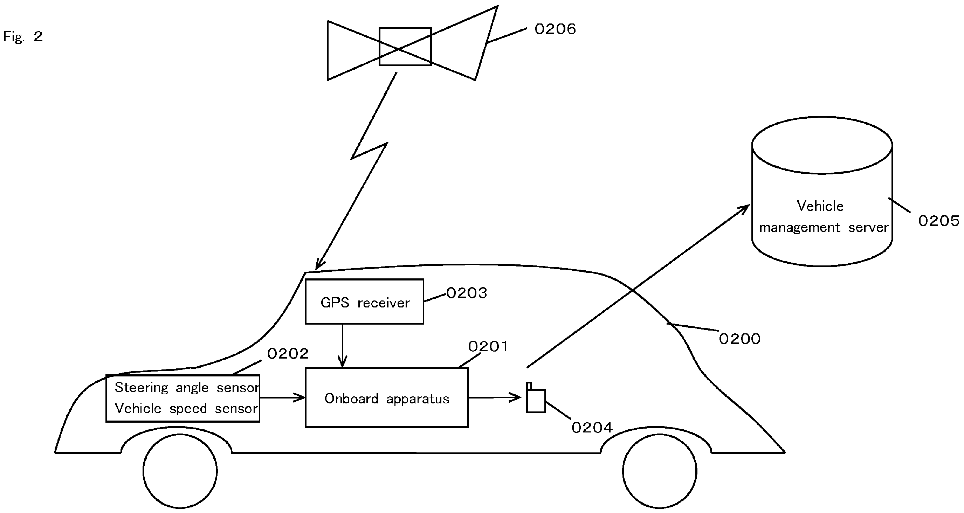

Figures 1 and 2 are conceptual diagrams illustrating an example of a lased-vehicle pooling system of an embodiment 1.

As illustrated in Figure 1, the leased-vehicle pooling system enables pooling of a leased vehicle 0100 in a vehicle management server 0104 by implementing network connection such as the Internet and broadband between an onboard apparatus 0101 of the leased vehicle 0100 and the vehicle management server 0104. The leased vehicle 0100 has a sensor 0102 such as a steering angle sensor, a vehicle speed sensor and the like and a GPS receiver 0103 for receiving a GPS signal of a GPS satellite 0105 so as to detect a current position of the vehicle, and the leased-vehicle pooling system improves an operating rate of the leased vehicle through pooling of one or a plurality of the leased vehicles. The system is configured such that the onboard apparatus 0101 as well as the vehicle management server 0104 retain information for pooling such as vehicle identification information, pooler identification information, and written-agreement identification information, the aforementioned information is transmitted from the onboard apparatus 0101 to the vehicle management server 0104 in use of the leased vehicle 0100, and a lease-fee calculation rule is acquired so as to calculate a lease fee.

Also, as illustrated in Figure 2, the leased-vehicle pooling system enables pooling of a leased vehicle 0200 in a vehicle management server 0205 by implementing network connection such as the Internet and broadband between an output of onboard apparatus 0201 of the leased vehicle 0200 and the vehicle management server 0104 through a portable terminal apparatus 0204. The leased vehicle 0200 has a sensor 0202 such as a steering angle sensor, a vehicle speed sensor and the like and a GPS receiver 0203 for receiving a GPS signal of a GPS satellite 0206 so as to detect a current position of the vehicle, and the leased-vehicle pooling system improves an operating rate of the leased vehicle through pooling of one or a plurality of the leased vehicles. The system is configured such that the onboard apparatus 0201 as well as the vehicle management server 0205 retain information for pooling such as vehicle identification information, pooler identification information, and written-agreement identification information, the aforementioned information is transmitted from the onboard apparatus 0201 via the portable terminal apparatus 0204 to the vehicle management server 0205 in use of the leased vehicle 0200, and a lease-fee calculation rule is acquired so as to calculate a lease fee.

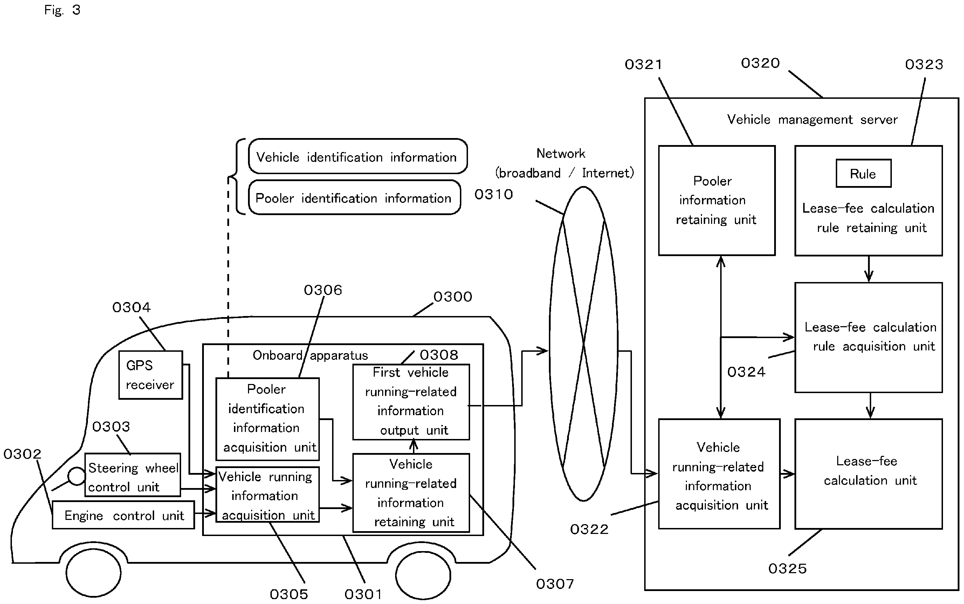

Figure 3 is a functional block diagram illustrating an example of the leased-vehicle pooling system of the embodiment 1.

As illustrated in Figure 3, this leased-vehicle pooling system consists of a leased vehicle 0300, a network 0310, and a vehicle management server 0320, and the leased vehicle 0300 consists of an onboard apparatus 0301, an engine control unit 0302, a steering-wheel control unit 0303, and a GPS receiver 0304.

The onboard apparatus 0301 has: a vehicle running information acquisition unit 0305 for acquiring vehicle running information from the leased vehicle; a pooler identification information acquisition unit 0306 for acquiring pooler identification information for identifying which of the poolers a user of the leased vehicle is; a vehicle running-related information retaining unit 0307 for retaining the acquired pooler identification information and the vehicle running information when the pooler identified by the pooler identification information is using the leased vehicle in association with each other as vehicle running-related information; and a first vehicle running-related information output unit 0308 for outputting the retained vehicle running-related information to the vehicle management server.

The vehicle management server 0320 consists of: a pooler information retaining unit 0321 for retaining vehicle identification information of the leased vehicle 0300 and pooler identification information for two or more poolers of the leased vehicle 0300 in association with each other; a vehicle running-related information acquisition unit 0322 for acquiring vehicle running-related information including the vehicle identification information, the pooler identification information of either one of the two or more vehicle poolers, and vehicle running information of the leased vehicle; a lease-fee calculation rule retaining unit 0323 for retaining a lease-fee calculation rule which is a rule for calculating a lease fee to be charged to each of the poolers on the basis of the received vehicle running-related information; a lease-fee calculation rule acquisition unit 0324 for acquiring the lease-fee calculation rule; and a lease-fee calculation unit 0325 for calculating the lease fee to be charged to each of the poolers on the basis of the received running-related information and the acquired lease-fee calculation rule.

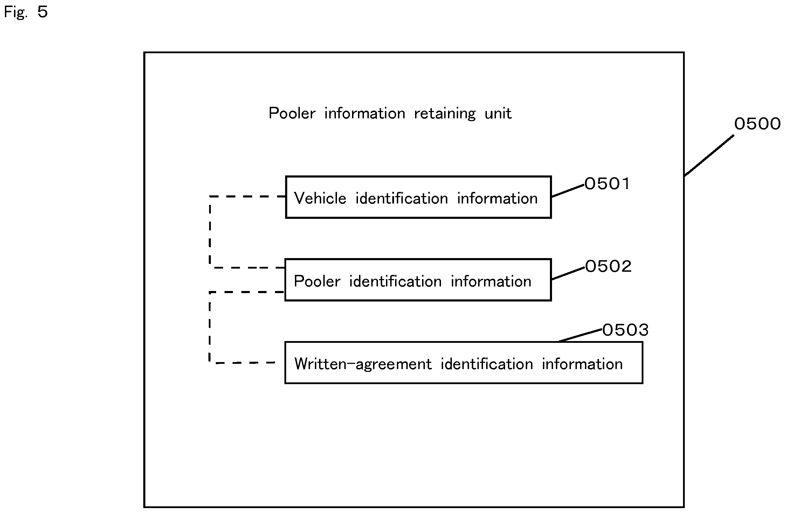

Moreover, as illustrated in Figure 5, a pooler information retaining unit 0500 retains vehicle identification information 0501 of the leased vehicle 0300, pooler identification information 0502 for two or more poolers of the leased vehicle 0300, and written-agreement identification information 0503 which is identification information of a document (including electronic documents) relating to an agreement made among the poolers identified by the pooler identification information 0502 on use/management of the leased vehicle identified by the vehicle identification information associated with the pooler identification information, in further association with each other.

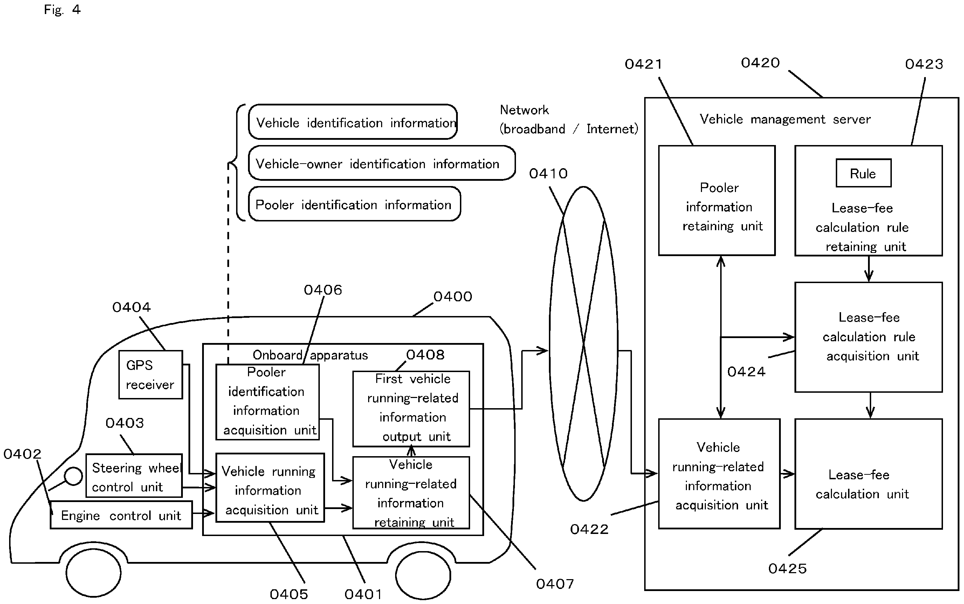

Figure 4 is a functional block diagram illustrating an example of the leased-vehicle pooling system of the embodiment 1.

As illustrated in Figure 4, this leased-vehicle pooling system consists of a leased vehicle 0400, a network 0410, and a vehicle management server 0420, and the leased vehicle 0400 consists of an onboard apparatus 0401, an engine control unit 0402, a steering-wheel control unit 0403, and a GPS receiver 0404 as illustrated in Figure 4. Here, unit in the leased-vehicle pooling system in Figure 4 has a similar configuration to that in Figure 3, and thus the detailed description thereabout will be omitted and only the differences will be described.

A pooler identification information acquisition unit 0406 in Figure 4 is configured by adding acquisition of vehicle-owner identification information of the leased vehicle to acquisition of the vehicle identification information and the pooler identification information by the pooler identification information acquisition unit 0306 in Figure 3. For the vehicle-owner identification information assumes such a case is assumed that, when there is a plurality of leasing companies, the leased vehicles of those leasing companies are integrally managed. Alternatively, a case of a company in charge of information processing of a leasing operation on behalf of the leasing company is assumed. In such a case, since a lease-fee calculation rule may be different depending on the leasing company, the vehicle-owner identification information acts effectively.

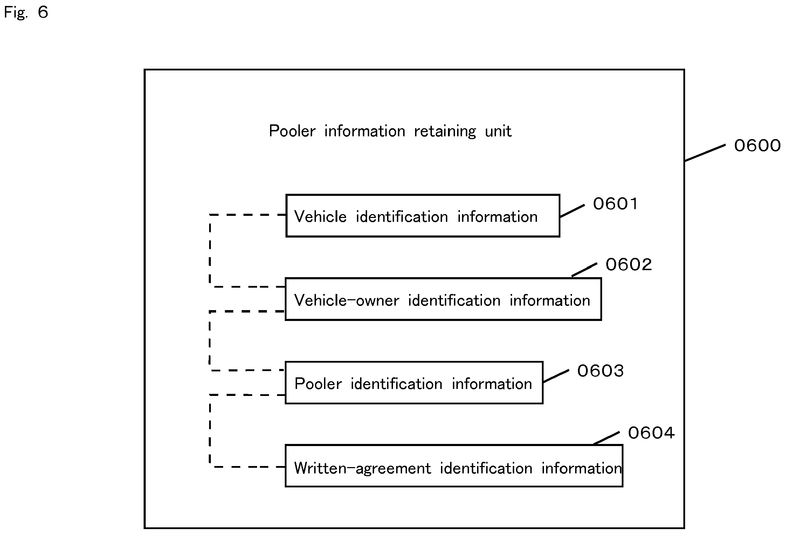

Moreover, as illustrated in Figure6, a pooler information retaining unit 0600 retains vehicle identification information 0601 of the leased vehicle 0400, owner identification information (vehicle-owner identification information) 0602 of the leased vehicle 0400, pooler identification information 0603 for two or more poolers of the leased vehicle 0400, and written-agreement identification information 0604 which is identification information of a document (including electronic documents) relating to an agreement made among the poolers identified by the pooler identification information 0603 on use/management of the leased vehicle identified by the vehicle identification information associated with the pooler identification information 0603, in further association with each other.

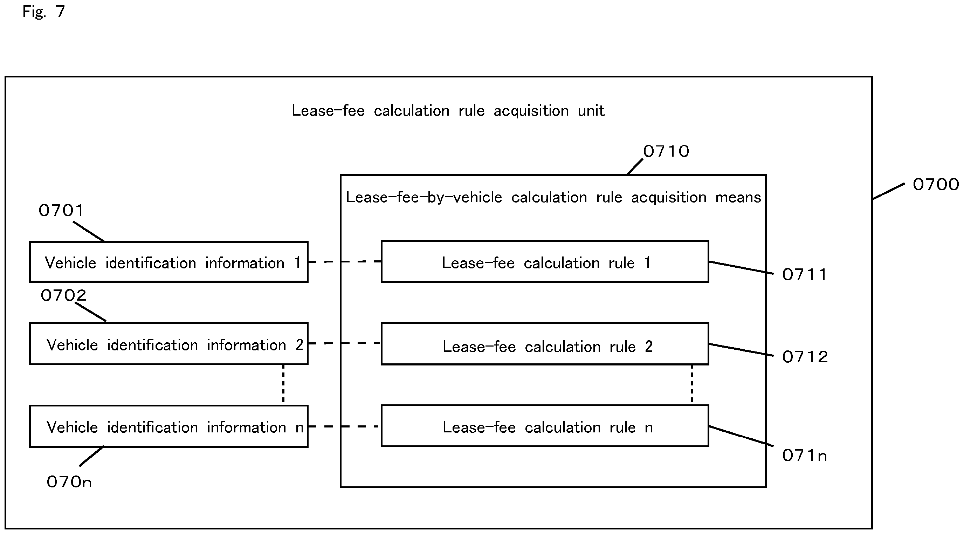

Figure 7 is a block diagram of a lease-fee calculation rule acquisition unit of the embodiment 1.

As illustrated in Figure 7, the lease-fee calculation rule acquisition unit 0700 is configured such that it has a lease-fee-by-vehicle calculation rule acquisition means 0710 for acquiring a lease-fee calculation rule by using the vehicle identification information and acquires the lease-fee calculation rules 0711, 0712, ... 071n by using the vehicle identification information 0701, 0702, ... 070n.

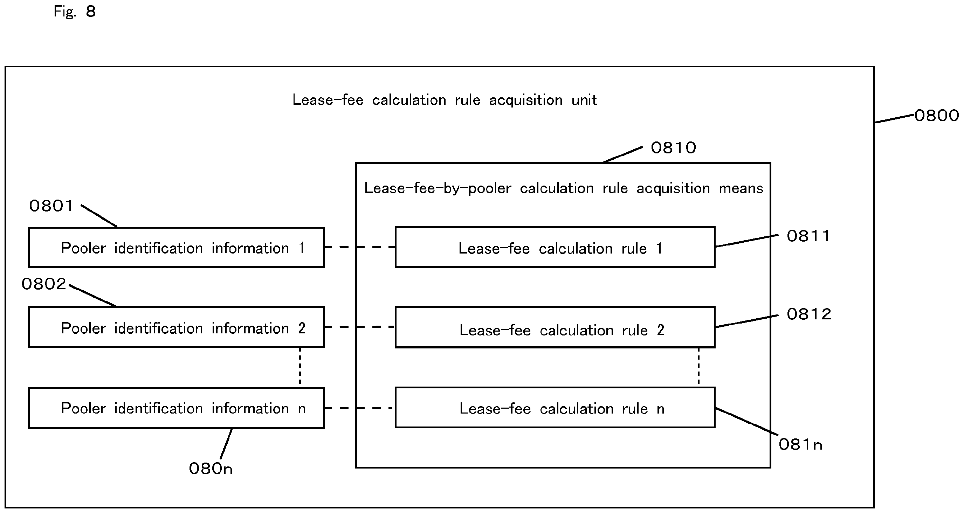

Figure 8 is a block diagram of a lease-fee calculation rule acquisition unit of the embodiment 1.

As illustrated in Figure 8, the lease-fee calculation rule acquisition unit 0800 is configured such that it has a lease-fee-by-pooler calculation rule acquisition means 0810 for acquiring a lease-fee calculation rule by using the pooler identification information and acquires the lease-fee calculation rules 0811, 0812, ... 081n by using the pooler identification information 0801, 0802, ... 080n.

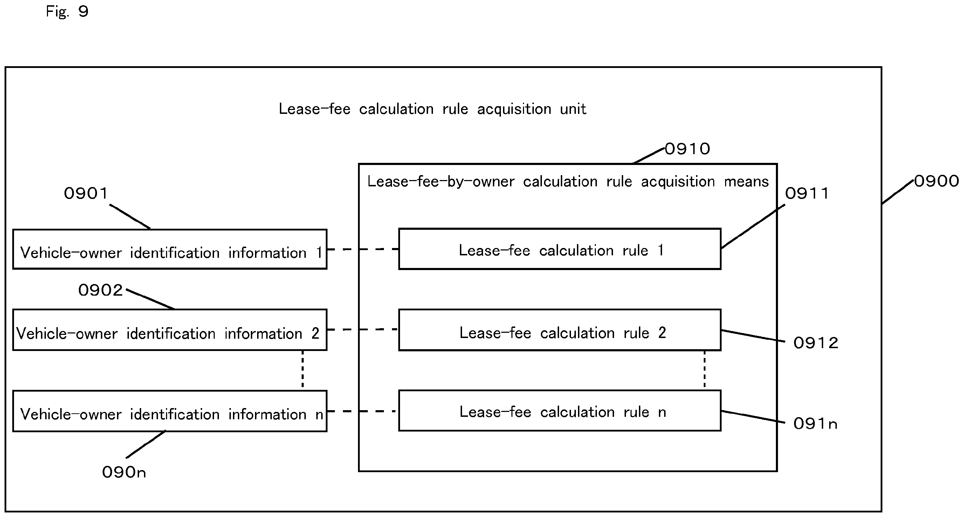

Figure 9 is a block diagram of a lease-fee calculation rule acquisition unit of the embodiment 1.

As illustrated in Figure 9, the lease-fee calculation rule acquisition unit 0900 is configured such that it has a lease-fee-by-vehicle-owner calculation rule acquisition means 0910 for acquiring a lease-fee calculation rule by using the vehicle-owner identification information and acquires the lease-fee calculation rules 0911, 0912, ... 091n by using the vehicle-owner identification information 0901, 0902, ... 090n.

For operations of the lease-fee calculation rule acquisition units 0700, 0800, 0900 in Figures 7 to 9, examples have been shown in which the lease-fee calculation rule is acquired according to any one of the vehicle identification information, the pooler identification information, and the vehicle-owner identification information. However, this is not limiting, and the lease-fee calculation fee may be acquired according to: the vehicle identification information and the pooler information; the vehicle identification information and the vehicle-owner identification information; the pooler identification and the vehicle-owner identification information; or the vehicle identification information, the pooler information, and the vehicle-owner identification.

### (Addition)

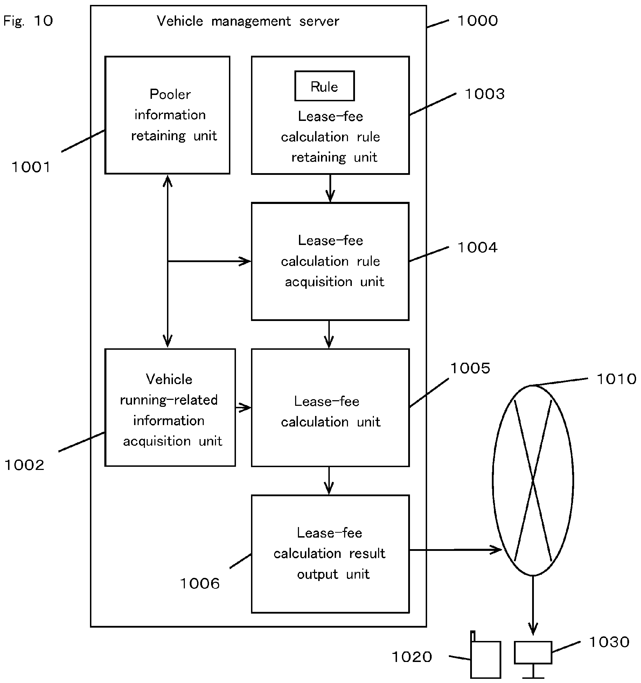

Figure 10 is a diagram illustrating an example in which a lease-fee calculation result of a vehicle management server is output to a terminal apparatus used by a user.

As illustrated in Figure 10, the vehicle management server 1000 is configured to have a pooler information retaining unit 1001, a vehicle-running related information acquisition unit 1002, a lease-fee calculation rule retaining unit 1003, a lease-fee calculation rule acquisition unit 1004, a lease-fee calculation unit 1005, and a lease-fee calculation result output unit 1006 for outputting information about the calculated lease fee to a terminal apparatus used by the vehicle poolers.

### <Onboard apparatus>

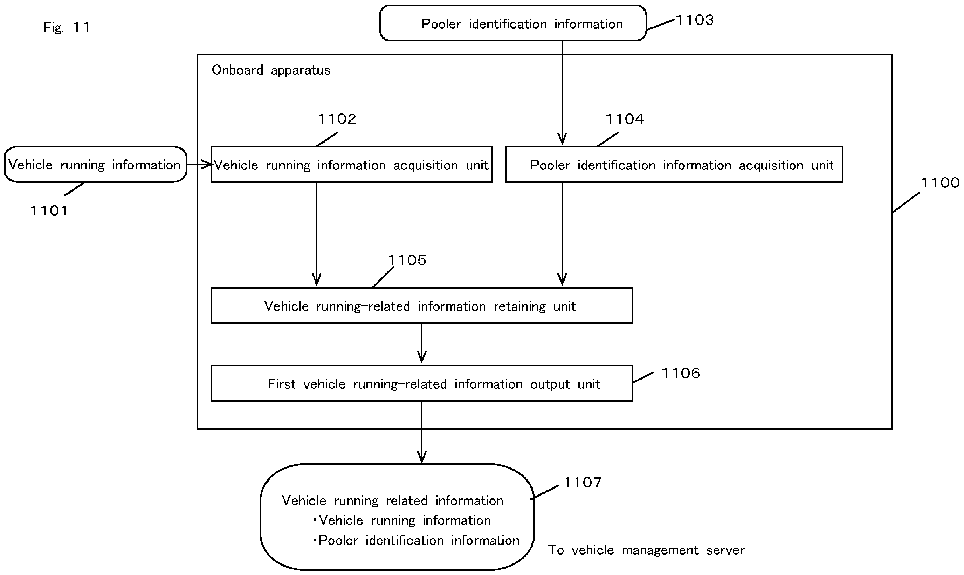

Figure 11 is a diagram for explaining the acquisition operation of the vehicle running information and the pooler identification information in the onboard apparatus.

### <Configuration>

### <Operation>

As illustrated in Figure 11, the onboard apparatus 1100 has: a vehicle running information acquisition unit 1102 for acquiring vehicle running information 1101 from the leased vehicle; a pooler identification information acquisition unit 1104 for acquiring pooler identification information 1103 for identifying which of the poolers a user of the leased vehicle is; a vehicle running-related information retaining unit 1105 for retaining the acquired pooler identification information and the vehicle running information when the pooler identified by the pooler identification information is using the leased vehicle in association with each other as vehicle running-related information; and a first vehicle running-related information output unit 1106 for outputting the retained vehicle running-related information to the vehicle management server.

The onboard apparatus 1100 acquires the vehicle running information 1101 from the leased vehicle by the vehicle running information acquisition unit 1102 and acquires the pooler identification information 1103 for identifying which of the poolers a user of the leased vehicle is by the pooler identification information acquisition unit 1104. The vehicle running-related information retaining unit 1105 retains the acquired pooler identification information and the vehicle running information when the pooler identified by the pooler identification information is using the leased vehicle in association with each other as vehicle running-related information. The first vehicle running-related information output unit 1106 outputs the vehicle running-related information1107 including the vehicle running information and the pooler identification information to the vehicle management server.

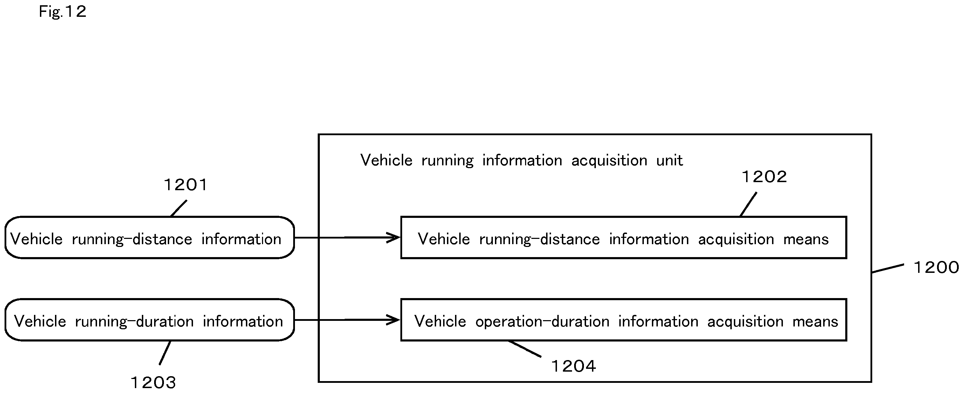

Figure 12 is a functional block diagram of a vehicle running information acquisition unit of the onboard apparatus. As illustrated in Figure 12, the vehicle running information acquisition unit 1200 of the onboard apparatus has a vehicle running-distance information acquisition means 1202 for acquiring vehicle running-distance information 1201 from the leased vehicle and/or a vehicle running-duration information acquisition means 1204 for acquiring vehicle operation-duration information 1203 which is information for determining a vehicle operation duration from the vehicle.

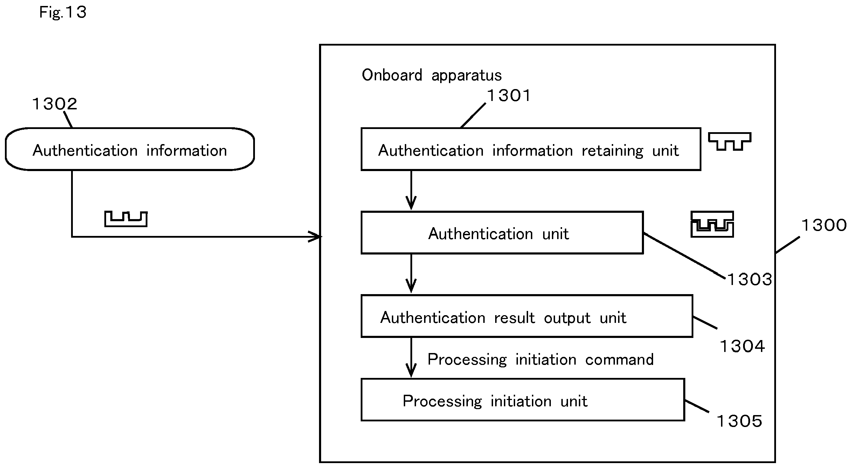

Figure 13 is a functional block diagram for explaining an authentication operation of a user by the onboard apparatus.

### <Configuration>

As illustrated in Figure 13, the onboard apparatus 1300 may have: an authentication information retaining unit 1301 for retaining authentication information for authenticating the pooler identification information; an authentication unit 1303 for authenticating the acquired pooler identification information (authentication information 1302) by the held authentication information; an authentication result output unit 1304 for outputting an authentication result in the authentication unit 1303; and a processing initiation unit 1305 for making the pooler identification information usable as the pooler identification information only when the output authentication result is positive.

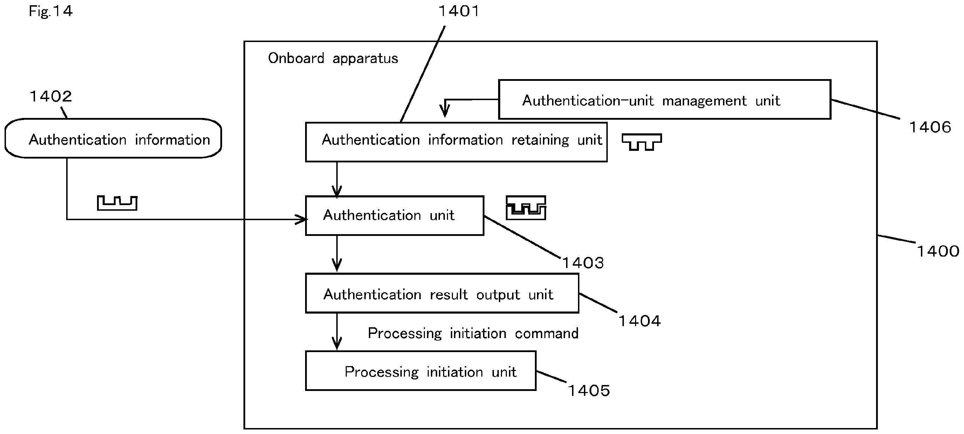

Figure 14 is a functional block diagram of an authentication-unit management unit for making addition, deletion, change, update and the like to the authentication information retaining unit of the onboard apparatus.

### <Configuration>

As illustrated in Figure 14, an onboard apparatus 1400 may have an authentication information retaining unit 1401, an authentication unit 1403, an authentication result output unit 1404, and a processing initiation unit 1405 and may further have an authentication-unit management unit 1406 for managing the authentication unit. The authentication-unit management unit 1406 may make addition, deletion, change, update and the like to the authentication information retaining unit 1401.

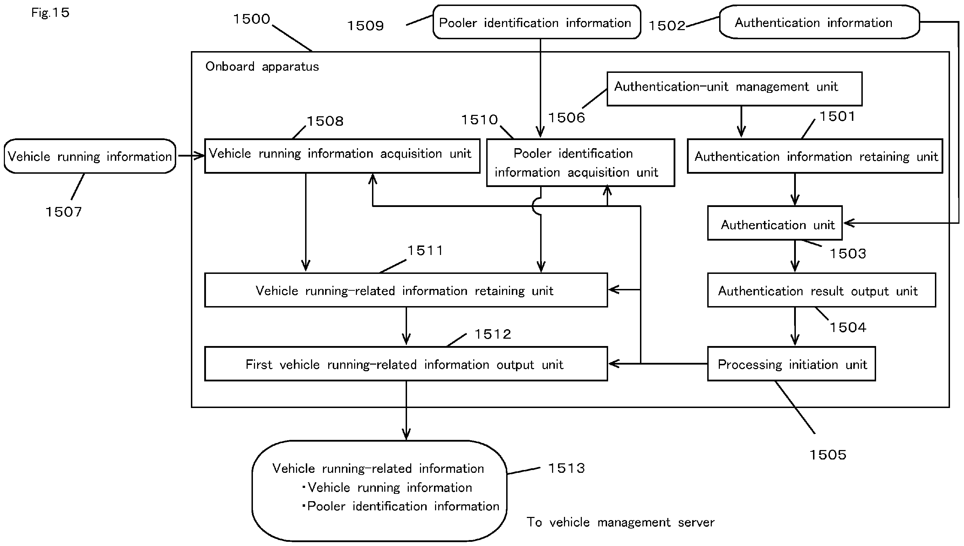

Figure 15 is a functional block diagram for explaining a relationship between acquisition of the vehicle running-related information and the authentication operation in the onboard apparatus.

### <Configuration>

As illustrated in Figure 15, the onboard apparatus 1500 has: an authentication information retaining unit 1501 for retaining authentication information for authenticating the pooler identification information; an authentication unit 1503 for authenticating the acquired pooler identification information (authentication information 1502) by the retained authentication information; an authentication result output unit 1504 for outputting an authentication result in the authentication unit 1503; and a processing initiation unit 1505 for making the pooler identification information usable as the pooler identification information only when the output authentication result is positive, and it may further have a authentication-unit management unit 1506 for managing the authentication unit.

### <Portable terminal apparatus for authentication>

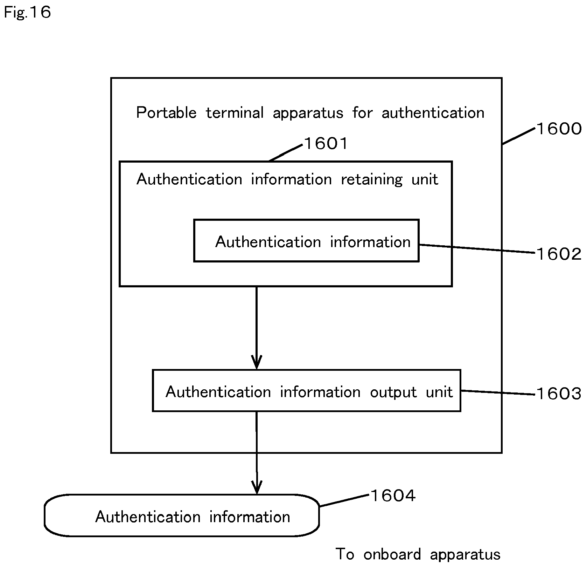

Figure 16 is a functional block diagram of a portable terminal apparatus for authentication.

### <Configuration>

As illustrated in Figure 16, a portable terminal apparatus for authentication 1600 may be configured to have an authentication information retaining unit 1601 for retaining authentication information 1602 and an authentication information output unit 1603 for outputting the retained authentication information to the onboard apparatus.

The portable terminal apparatus for authentication 1600 is a terminal apparatus having near-distance wireless interface such as Bluetooth (registered trademark), and when it gets closer to the leased vehicle and sends the authentication information to the onboard apparatus, a usable state can be acquired by unlocking a door, starting an engine of the leased vehicle or the like.

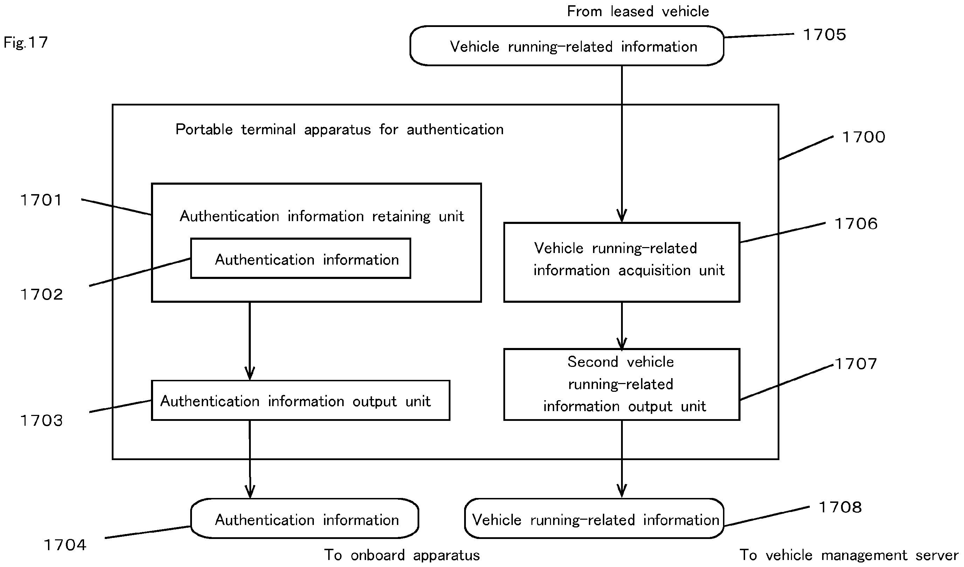

Figure 17 is a functional block diagram for explaining acquisition of the vehicle running-related information by the portable terminal apparatus for authentication.

### <Configuration>

As illustrated in Figure 17, the portable terminal apparatus for authentication 1700 has: the authentication information retaining unit 1701; and the authentication information output unit 1703 for outputting the retained authentication information 1702 to the onboard apparatus. Furthermore, it may be configured to have: a vehicle running-related information acquisition unit 1706 for acquiring vehicle running-related information output from a vehicle running-related information output unit; and a second vehicle running-related information output unit 1707 for outputting the acquired vehicle related information to the vehicle management server.

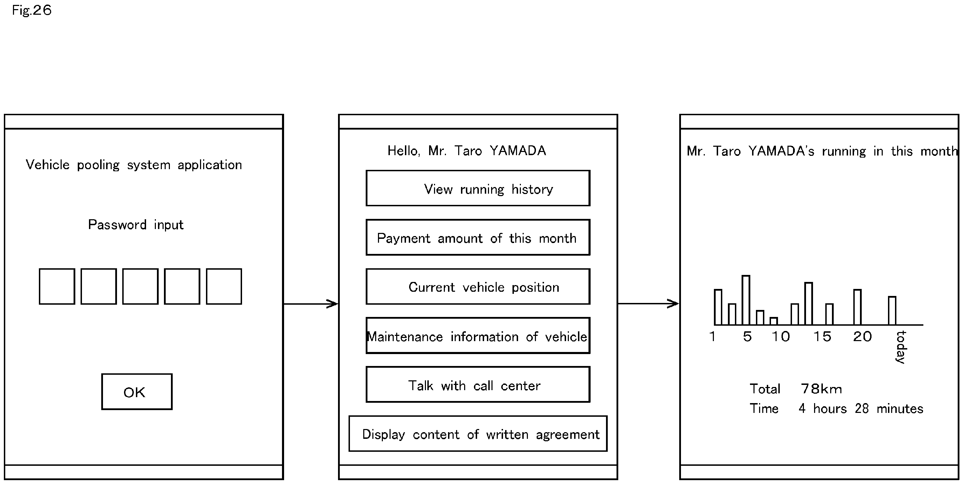

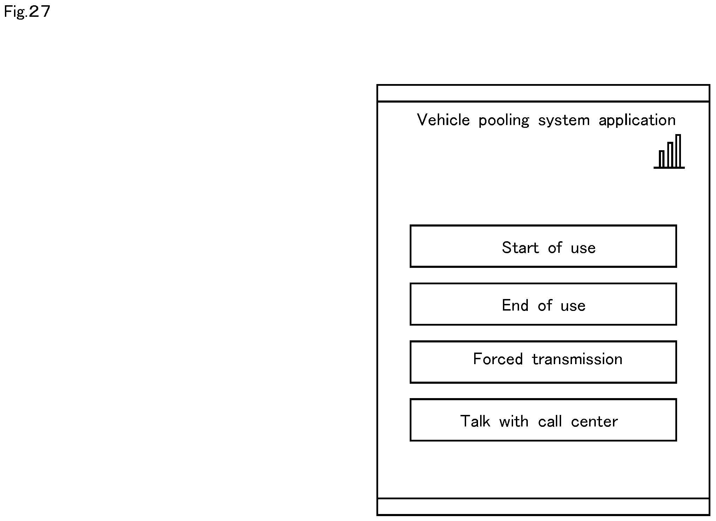

Moreover, a vehicle pooling system application which will be described later and illustrated in Figures 26 and 27 may be downloaded from the vehicle management server to the portable terminal apparatus for authentication for displaying confirmation of start or end of use and written-agreement contents. Moreover, by pressing a "forced transmission button" of the system application, the vehicle running-related information and the like accumulated in the onboard apparatus can be taken up from the onboard apparatus to the vehicle management server.

### <Onboard apparatus>

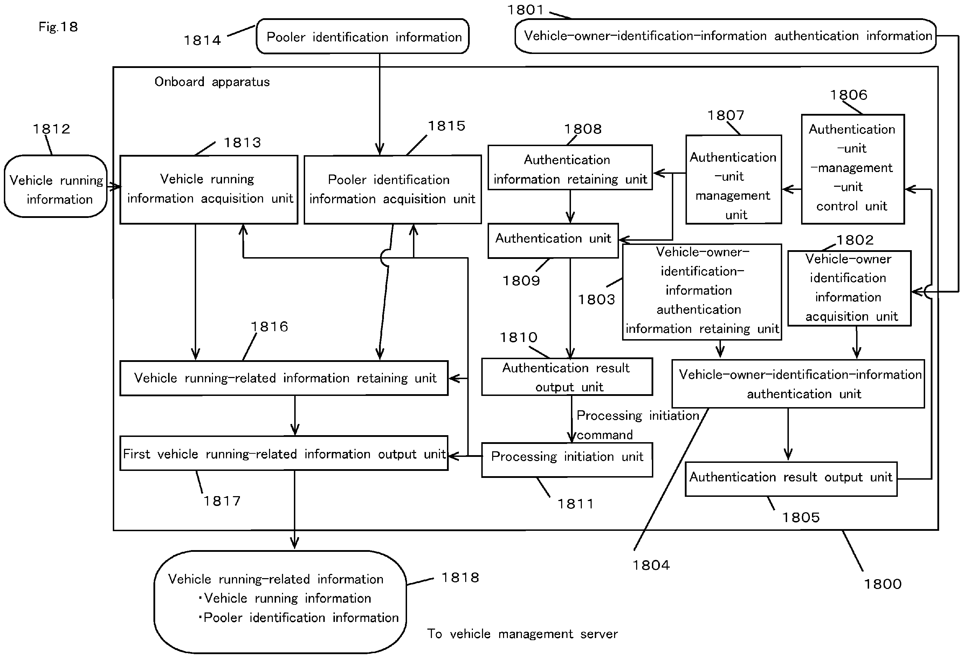

Figure 18 is a functional block diagram for explaining pooling using the vehicle-owner-identification-information authentication information. Figure 18 illustrates an example in which the vehicle owner is authenticated to use the authentication-unit management unit.

### <Configuration/operation>

As illustrated in Figure 18, the onboard apparatus 1800 has: a vehicle-owner-identification-information authentication information retaining unit 1803 for retaining vehicle-owner-identification-information authentication information which is information for authenticating the vehicle-owner identification information; a vehicle-owner identification information acquisition unit 1802 for acquiring the vehicle-owner identification information; a vehicle-owner identification information authentication unit 1804 for authenticating the acquired vehicle-owner identification information (vehicle-owner-identification-information authentication information 1801) by the retained vehicle-owner-identification-information authentication information; an authentication result output unit 1805 for outputting an authentication result; and an authentication-unit-management-unit control unit 1807 functioning an authentication-unit management unit 1806 only when the output authentication result is positive.

The authentication function configured by an authentication information retaining unit, an authentication unit, an authentication result output unit 1810, and a processing initiation unit has the same configuration as that in Figure 15, and thus the description thereabout will be omitted. Also, the function of transmitting the vehicle running-related information to the vehicle server configured by a vehicle running information acquisition unit 1813, a pooler identification information acquisition unit 1815, a vehicle running-related information retaining unit 1816, and a first vehicle running-related information output unit 1817 has the same configuration as that in Figure 15, and thus the description thereabout will be omitted.

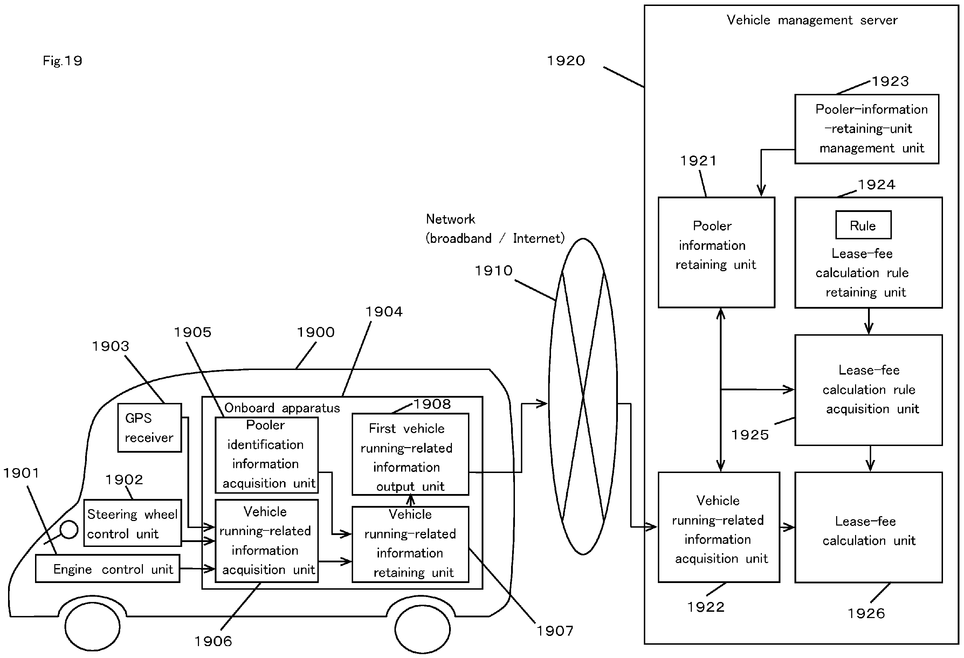

Figure 19 is a diagram illustrating an example in which a pooler-information-retaining-unit management unit is provided in the vehicle management server. Figure 19 illustrates an example in which the pooler-information-retaining-unit management unit for managing the pooler information retaining unit is added.

As illustrated in Figure 19, the leased-vehicle pooling system consists of a leased vehicle 1900, a network 1910, and a vehicle management server 1920, and the leased vehicle 1900 consists of an onboard apparatus 1904, an engine control unit 1901, a handle control unit 1902, and a GPS receiver 1903.

The onboard apparatus 1903 has: a vehicle running information acquisition unit 1906 for acquiring vehicle running information from the leased vehicle; a pooler identification information acquisition unit 1905 for acquiring pooler identification information for identifying which of the poolers a user of the leased vehicle is; a vehicle running-related information retaining unit 1907 for retaining the acquired pooler identification information and the vehicle running information when the pooler identified by the pooler identification information is using the leased vehicle in association with each other as vehicle running-related information; and a first vehicle running-related information output unit 1908 for outputting the retained vehicle running-related information to the vehicle management server.

The vehicle management server 1920 consists of: a pooler information retaining unit 1921 for retaining vehicle identification information of the leased vehicle 1900 and pooler identification information for two or more poolers of the leased vehicle 1900 in association with each other; a vehicle running-related information acquisition unit 1922 for acquiring vehicle running-related information including the vehicle identification information, the pooler identification information of either one of the two or more vehicle poolers, and vehicle running information of the leased vehicle; a lease-fee calculation rule retaining unit 1923 for retaining a lease-fee calculation rule which is a rule for calculating a lease fee to be charged to each of the poolers on the basis of the received vehicle running-related information; a lease-fee calculation rule acquisition unit 1924 for acquiring the lease-fee calculation rule; and a lease-fee calculation unit 1926 for calculating the lease fee to be charged to each of the poolers on the basis of the received running-related information and the acquired lease-fee calculation rule. A pooler-information-retaining-unit management unit 1923 for managing the pooler information retaining unit 1921 is added. The pooler-information-retaining-unit management unit 1923 is for performing operation such as addition, deletion, and change of information to the pooler information retaining unit 1921.

Moreover, a pooler information retaining unit 1921 has a configuration as illustrated in Figure 5 or Figure 6 and retains written-agreement identification information 0503 which is identification information of a document (including electronic documents) relating to an agreement made among the poolers identified by the pooler identification information 0502 on use/management of the leased vehicle identified by the vehicle identification information associated with the pooler identification information, in association with each other.

Agreement on use/management of the leased vehicle among the poolers is present as a document. This document includes information for specifying the pooler and agreement contents. This document may be a paper document or an electronic document, and both may be present. In the case of the paper document, it contains seals or signatures expressing agreement. Moreover, in the case of the electronic document, it contains electronic signatures or the like. The vehicle management server preferably stores agreement contents information as information indicating the agreement contents. For example, agreement contents may be such that: if a use running distance of a user comes up to a predetermined distance or more, a bearing ratio of the lease fee is increased; if a using period occupation ratio exceeds a predetermined ratio, a bearing ratio of the basic charge portion in the lease fee is increased; a predetermined condition cannot be exceeded without agreement by the other party;, or the leased vehicle cannot be used exceeding the predetermined condition.

On the other hand, in the vehicle management server of the leased-vehicle pooling system, information on how the leased vehicle was used by each of the poolers is collected by being included in the vehicle running-related information. Therefore, whether the agreement contents on the document have been fulfilled or not can be determined by comparing the vehicle running-related information with the agreement content information.

However, since it is cumbersome to determine that with reading the document, an agreement content determining unit conveniently processes a use history included in the vehicle running-related information and the agreement contents information so as to determine whether the use follows the agreement contents or not.

Alternatively, such processing can be considered that, instead of the use history, if a use to be performed violates the agreement contents, the leased vehicle cannot be used by the pooler on the basis of a determination result in the agreement contents determining unit.

In the latter case, that is, if the pooler is not allowed to use the leased vehicle, the first vehicle running-related information output unit of the onboard apparatus needs to be configured to transmit, to the vehicle management server, information that the leased vehicle is to be used even in a state before the engine of the vehicle is driven as the vehicle running information of the vehicle running-related information.

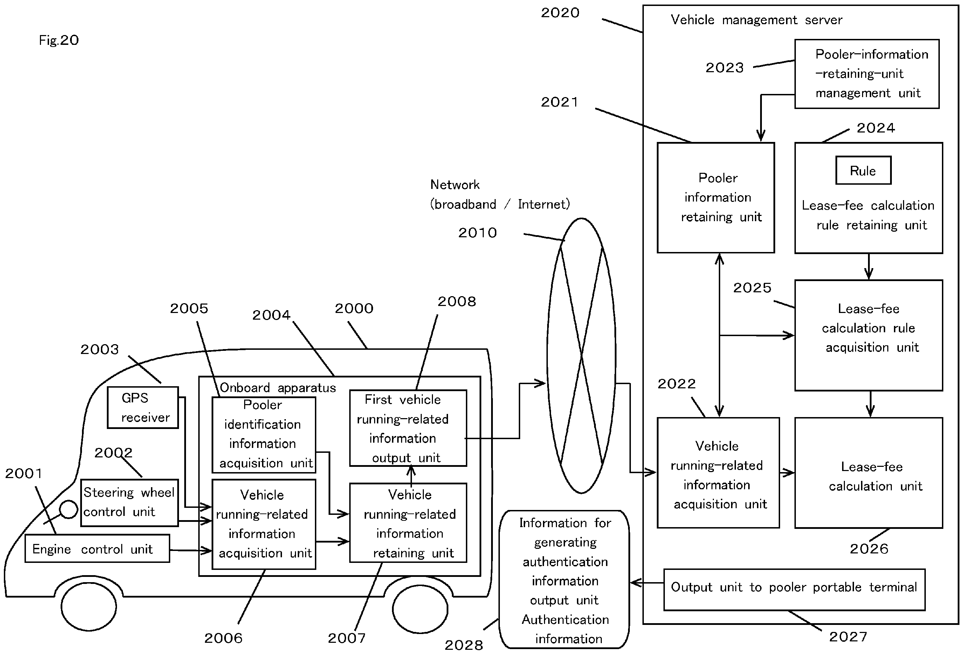

Figure 20 is a diagram illustrating an example in which the output unit to the portable terminal of the pooler is provided in the vehicle management server in the embodiment 1. The other configurations are similar to those in Figure 19, and thus the description thereabout will be omitted. Differences will be described in the following.

The vehicle management server 2020 has an output unit 2027 to a portable terminal of a pooler for using the portable terminal apparatus of the pooler as the portable terminal apparatus for authentication. The output unit 2027 to the portable terminal of the pooler transmits the authentication information and authentication information output unit generation information (2028), the latter being information for causing a computer in the portable terminal apparatus to generate an authentication information output unit for outputting this authentication information to the onboard apparatus to the portable terminal apparatus of the pooler identified by the pooler identification information retained in the pooler information retaining unit 2021

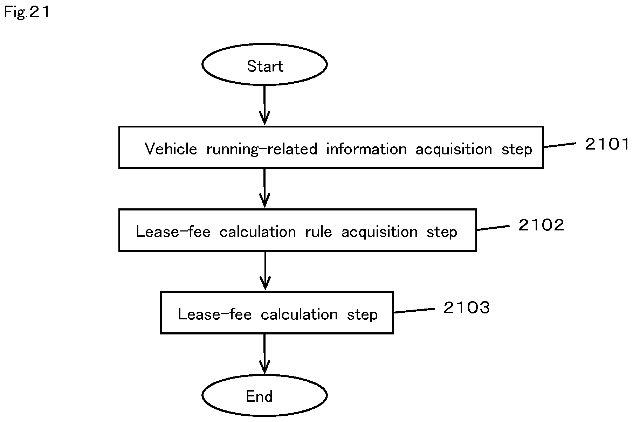

Figure 21 is a flowchart illustrating an example of a pooling method of the leased vehicle according to an embodiment 2. This is a diagram for explaining an operation method of the pooling system of the leased vehicle according to the embodiment 2 and includes an operation method of the vehicle management server of the pooling system of the leased vehicle.

The operation method of the vehicle management server of the leased-vehicle pooling system firstly acquires vehicle running-related information including vehicle identification information of a leased vehicle, pooler identification information of either one of the two or more vehicle poolers of the leased vehicle, and vehicle running information of the leased vehicle (step 2101). Then the method acquires a lease-fee calculation rule by a lease-fee calculation rule acquisition step 2102. Then the method calculates a lease fee to be charged to each of the poolers on the basis of the received running-related information and the acquired lease-fee calculation rule.

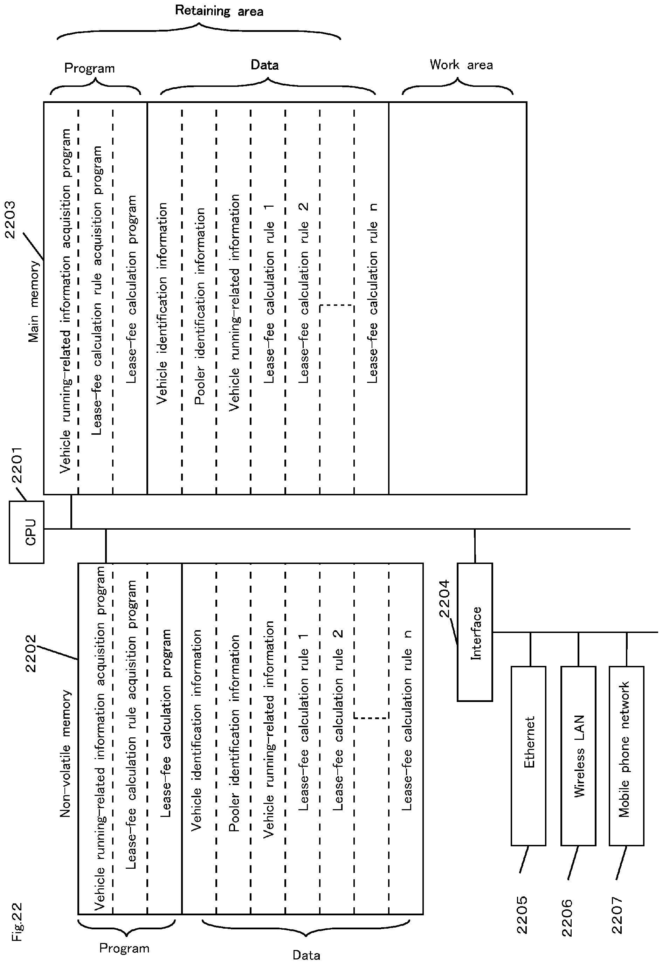

Figure 22 is a diagram illustrating an example of hardware configuration of the pooling method of the leased vehicle according to the embodiment 2 in Figure 21. It illustrates an example in which an operation program of the pooling system of the leased vehicle including an operation program readable and executable by the vehicle management server of the pooling system of the leased vehicle is realized, and the vehicle management server is a computer.

The computer consists of a CPU 2201, a non-volatile memory 2202, a main memory 2203, and an interface 2204. The non-volatile memory 2202 stores a vehicle running-related information acquisition program, a lease-fee calculation rule acquisition program, and a lease-fee calculation program. Moreover, the non-volatile memory 2202 stores data such as the vehicle identification information, the pooler identification information, the vehicle running-related information, and a plurality of lease-fee calculation rules. These programs and data are read into a retaining area of the main memory and executed in a work area. Moreover, the interface 2204 is connected to a network such as an Ethernet (registered trademark) 2205 of a wired LAN, a wireless LAN 2206, and a mobile phone network 2207.

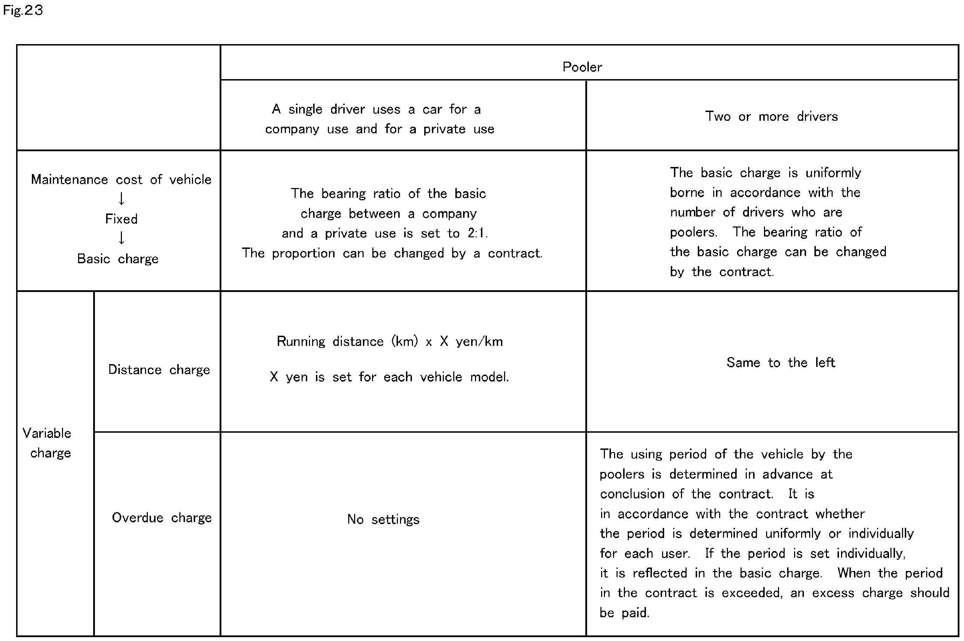

Figure 23 is a diagram for explaining the pooler and the lease-fee calculation rule.

In an example in Figure 23, a case in which a single driver as a pooler uses the leased vehicles for a company use and for a private use and a case in which two or more drivers as poolers uses the leased vehicles are considered separately. It is assumed that the vehicle is owned by a leasing company, and a pooling contract of the leased vehicle is concluded.

A lease fee is assumed to be paid monthly, and a gasoline cost in the pooling by a plurality of persons is not included in this lease-fee calculation. An oil feed card which is lent by the leasing company is used for paying for a gasoline cost, and the leasing company makes payment for that. Then, the price of the gasoline paid by the leasing company is linked with an average gasoline price of that month, an average fuel cost of the vehicle model for the pooling is also acquired, and the payment is finally settled in proportion to the running distance. That is, the gasoline cost is not automatically calculated on the basis of the running distance.

### <In the case of one driver>

The lease fee is calculated on the basis of a fixed basic charge including a maintenance cost of the vehicle and a variable charge made of a distance charge and an overdue charge. The bearing ratio of the basic charge between a company and a private use is set to 2:1. The ratio can be changed by a contract. The distance charge is set to a running distance (km) x X yen/km, and X yen is set for a vehicle model. A low amount is set for a mini motorcar, while the higher a body price of the leased vehicle is, the higher amount is set, for example. Therefore, the distance charges are somewhat higher for the hybrid cars, electric automobiles, fuel cell cars and the like. The gasoline cost is not included in the breakdown of this distance charge, and the running distance is not a running distance determined in advance but it means a running distance for which the vehicle actually ran for a month. With regard to the overdue charge, a using period for the leased vehicle by the pooler is determined at conclusion of the contract, and whether the time was exceeded or not is determined. This is not set for the case of a single driver.

### <In the case of two or more drivers>

The basic charge is uniformly borne in accordance with the number of drivers who are poolers. The bearing ratio of the basic charge can be changed by the contract. If ten units of the leased vehicles for 50 households in a condo are set for pooling, the basic charge of the lease fee per unit is one fifth, which can drastically reduce the lease fee. The distance charge is similar to the case of the single driver. With regard to the overdue charge, the using period of the leased vehicle of the pooler is determined in advance at conclusion of the lease contract. It is in accordance with the contract whether the period is determined uniformly or individually for each pooler. If the period is set individually, it is reflected in the basic charge. When the period in the contract is exceeded, an excess charge should be paid.

Here, in the pooling form of the leased vehicle, the parking lot charge shall be borne by the leasing company. The parking lot charge borne by the leasing company is considered as a maintenance cost of the vehicle and is reflected in the basic charge of the lease.

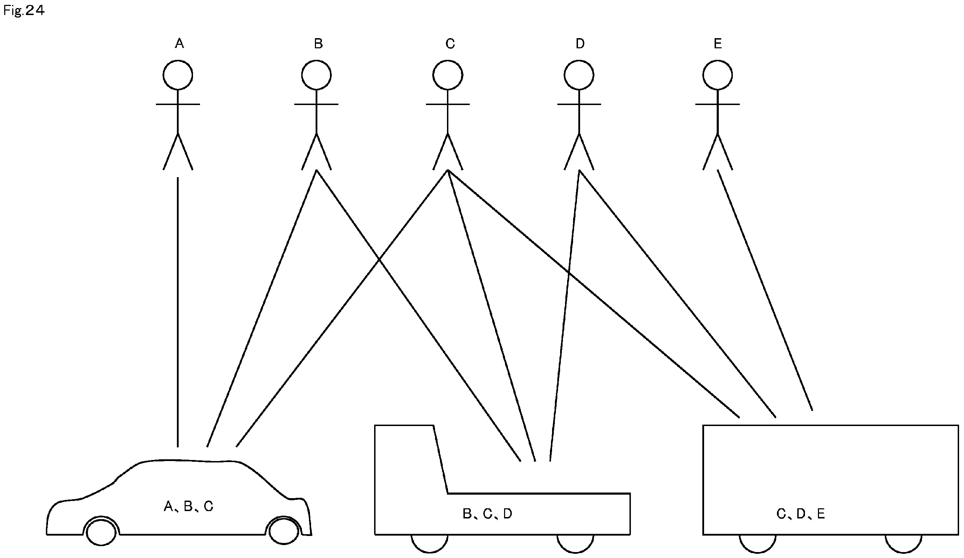

Figure 24 is a diagram illustrating an example of a pooling mode of the leased vehicle.

In the example in Figure 24, there are poolers A, B, C, D, and E, and a case where one unit of the leased vehicle by a plurality of persons and a case where a plurality of leased vehicles is shared by a plurality of persons are illustrated, for example. A sedan is pooled by three persons A, B, and C, a truck is pooled by B, C, and D, and a van is pooled by C, D, and E. In this mode, C pools all the leased vehicles. D pools the truck and the van and can use them separately according to the purpose.

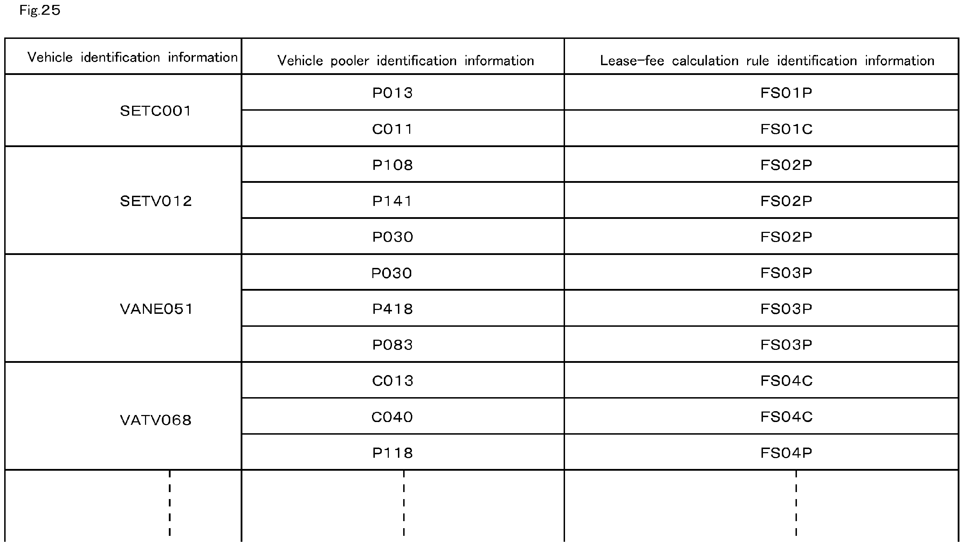

Figure 25 is a relational table of the vehicle identification information, the vehicle pooler identification information, and the lease-fee calculation rule identification information.

Figure 25 illustrates association among the vehicle identification information, the vehicle pooler identification information, and the lease-fee calculation rule identification information. For example, the vehicle identification information "SETC001" means the sedan, and two vehicle poolers are set. The pooler "PO13" corresponds to the lease-fee calculation rule identification information "FS01P", and the lease fee is calculated on the basis of that lease-fee calculation rule. Moreover, the pooler "C011" corresponds to the lease-fee calculation rule identification information "FS01C", and the lease fee is calculated on the basis of that lease-fee calculation rule.

Figure 26 is a diagram for explaining the operation of a vehicle pooling system application of the leased vehicle, and Figure 27 is a diagram illustrating an example of an operation screen of the vehicle pooling system application of the leased vehicle.

When the vehicle pooling system application is downloaded and installed in the portable terminal apparatus such as a smart phone, the operation screen as in Figure 27 is started. It has a menu of start of use, end of use, forced transmission, talk with call center, agreement screen contents display and the like, for example. This menu screen may include other functions. By touching a menu button of the "start of use", a screen for a password input is displayed, and by touching an "OK" button, a screen at the center in Figure 26 is displayed, and a running history, a payment amount of the month, the current vehicle position, maintenance information of the vehicle and the like can be known. By touching a menu button of the "running history", a screen on the right end in Figure 26 is displayed.

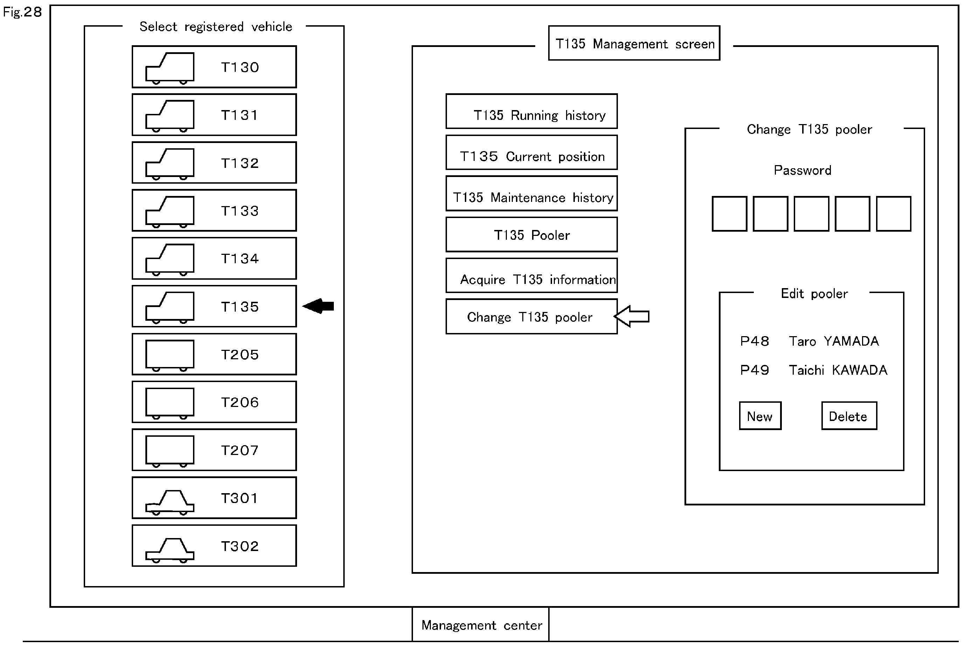

Figure 28 is a diagram illustrating an example of the pooling management screen of the vehicle server.

In the example in Figure 28, by selecting "T135" from among registered vehicles, "T135 management screen" is displayed on a monitor screen of the vehicle management server. By selecting "change T135 pooler" in the "T135 management screen", the "change T135 pooler" screen is displayed, and by logging in by inputting a password, an "edit pooler" screen is displayed, and "new" addition or "delete" can be made.

In the aforementioned embodiments 1 and 2, the number of the vehicle management servers is not limited to one, but a plurality of the servers can be respectively distributed for each operation at a management center.

As described above, according to the embodiments 1 and 2, the present invention can provide a leased-vehicle pooling system which implements pooling of a vehicle used for car lease so as to improve an operating rate per vehicle and can reduce a lease fee per person by bearing the lease fee by a plurality of persons. Moreover, the embodiments 1 and 2 can provide a system which can smoothly perform a duty imposed on a leasing company (owner of a private car) under the Road Transportation Act to the leasing company or a company in charge of information processing of a leasing operation on behalf of the leasing company. The embodiments 1 and 2 can also provide a leased-vehicle pooling system capable of an efficient operation of a leasing company even if there are various vehicle models of the leased vehicles such as gasoline vehicles, electric vehicles, hybrid vehicles, and fuel cell vehicles.

## Claims

1. A leased-vehicle pooling system having a vehicle management server comprising:
a pooler information retaining unit for retaining vehicle identification information of the leased vehicle and pooler identification information for two or more poolers of the leased vehicle in association with each other;
a vehicle running-related information acquisition unit for acquiring vehicle running-related information including the vehicle identification information, the pooler identification information of either one of the two or more vehicle poolers, and vehicle running information of the leased vehicle;
a lease-fee calculation rule retaining unit for retaining a lease-fee calculation rule which is a rule for calculating a lease fee to be charged to each of the poolers on the basis of the received vehicle running-related information;
a lease-fee calculation rule acquisition unit for acquiring the lease-fee calculation rule; and
a lease-fee calculation unit for calculating the lease fee to be charged to each of the poolers on the basis of the received running-related information and the acquired lease-fee calculation rule.

2. A leased-vehicle pooling system having a vehicle management server comprising:
a pooler information retaining unit for retaining vehicle identification information of a leased vehicle, leased-vehicle-owner identification information, and pooler identification information for two or more poolers of the leased vehicle in association with each other;
a vehicle running-related information acquisition unit for acquiring vehicle running-related information including the vehicle identification information, the leased-vehicle-owner identification information, the pooler identification information of either one of the two or more vehicle poolers, and vehicle running information of the leased vehicle;
a lease-fee calculation rule retaining unit for retaining a lease-fee calculation rule which is a rule for calculating a lease fee to be charged to each of the poolers on the basis of the received vehicle running-related information;
a lease-fee calculation rule acquisition unit for acquiring the lease-fee calculation rule; and
a lease-fee calculation unit for calculating the lease fee to be charged to each of the poolers on the basis of the received running-related information and the acquired lease-fee calculation rule.

3. The leased-vehicle pooling system according to claim 1 or 2, wherein the pooler information retaining unit retains written-agreement identification information in further association, which is identification information of a document (including electronic documents) relating to an agreement made among the poolers identified by the pooler identification information on use/management of the leased vehicle identified by the vehicle identification information associated with the pooler identification information .

4. The leased-vehicle pooling system according to any one of claims 1 to 3, wherein the lease-fee calculation rule acquisition unit has lease-fee-by-vehicle calculation rule acquisition means for acquiring the lease-fee calculation rule by using the vehicle identification information.

5. The leased-vehicle pooling system according to any one of claims 1 to 4, wherein the lease-fee calculation rule acquisition unit has lease-fee-by-pooler calculation rule acquisition means for acquiring the lease-fee calculation rule by using the pooler identification information.

6. The leased-vehicle pooling system according to any one of claims and claims 3 to 5 dependent on claim 2, wherein the lease-fee calculation rule acquisition unit has lease-fee-by-vehicle-owner calculation rule acquisition means for acquiring the lease-fee calculation rule by using the vehicle-owner identification information.

7. The leased-vehicle pooling system according to any one of claims 1 to 6 having a vehicle management server further having a lease-fee calculation result output unit for outputting information related to the calculated lease fee to a terminal apparatus used by the vehicle poolers.

8. The leased-vehicle pooling system according to any one of claims 1 to 7 further having an onboard apparatus having:
a vehicle running information acquisition unit for acquiring vehicle running information from the leased vehicle;
a pooler identification information acquisition unit for acquiring pooler identification information for identifying which of the poolers a user of the leased vehicle is;
a vehicle running-related information retaining unit for retaining the acquired pooler identification information and the vehicle running information when the pooler identified by the pooler identification information is using the leased vehicle in association with each other as vehicle running-related information; and
a first vehicle running-related information output unit for outputting the retained vehicle running-related information to the vehicle management server.

9. The leased-vehicle pooling system according to claim 8, wherein the vehicle running information acquisition unit of the onboard apparatus has a vehicle running-distance information acquisition means for acquiring vehicle running-distance information from the leased vehicle and/or a vehicle running-duration information acquisition means for acquiring vehicle operation-duration information which is information for determining a vehicle operation duration from the vehicle.

10. The leased-vehicle pooling system according to claim 8 or 9, wherein the onboard apparatus further has:
an authentication information retaining unit for retaining authentication information for authenticating the pooler identification information;
an authentication unit for authenticating the acquired pooler identification information by the retained authentication information;
an authentication result output unit for outputting an authentication result in the authentication unit; and
a processing initiation unit for making the pooler identification information usable as the pooler identification information only when the output authentication result is positive.

11. The leased-vehicle pooling system according to claim 10, wherein the onboard apparatus further has an authentication-unit management unit for managing the authentication unit.

12. The leased-vehicle pooling system according to any one of claims 8 to 11 further having a portable terminal apparatus for authentication having:
the authentication information retaining unit for retaining the authentication information; and
the authentication information output unit for outputting the retained authentication information to the onboard apparatus.

13. The leased-vehicle pooling system according to claim 12, wherein the portable terminal apparatus for authentication further has:
a vehicle running-related information acquisition unit for acquiring vehicle running-related information output from a vehicle running-related information output unit; and
a second vehicle running-related information output unit for outputting the acquired vehicle related information to the vehicle management server.

14. The leased-vehicle pooling system according to any one of claim 11 and claims 12 and 13 dependent on claim 11, wherein the onboard apparatus further has:
a vehicle-owner-identification-information authentication information retaining unit for retaining vehicle-owner-identification-information authentication information which is information for authenticating the vehicle-owner identification information;
a vehicle-owner identification information acquisition unit for acquiring the vehicle-owner identification information;
a vehicle-owner identification information authentication unit for authenticating the acquired vehicle-owner identification information by the retained vehicle-owner-identification-information authentication information;
an authentication result output unit for outputting an authentication result; and
an authentication-unit-management-unit control unit functioning the authentication-unit management unit only when the output authentication result is positive.

15. The leased-vehicle pooling system according to any one of claims 1 to 14 further having a pooler-information-retaining-unit management unit for managing the pooler information retaining unit.

16. The leased-vehicle pooling system according to any one of claims 1 to 15,
wherein the vehicle management server further has an output unit to a portable terminal of the pooler which transmits the authentication information and authentication information output unit generation information which is information for causing a computer in the portable terminal apparatus to generate an authentication information output unit for outputting this authentication information to the onboard apparatus to the portable terminal apparatus of the pooler identified by the pooler identification information retained in the pooler information retaining unit so as to use the portable terminal apparatus of the pooler as a portable terminal apparatus for authentication.

17. An operation method of a leased-vehicle pooling system comprising an operation method of a vehicle management server of the leased-vehicle pooling system consisting of:
a vehicle running-related information acquisition step for acquiring vehicle running-related information including vehicle identification information of a leased vehicle, pooler identification information of either one of the two or more vehicle poolers of the leased vehicle, and vehicle running information of the leased vehicle;
a lease-fee calculation rule acquisition step for acquiring a lease-fee calculation rule; and
a lease-fee calculation step for calculating a lease fee to be charged to each of the poolers on the basis of the received running-related information and the acquired lease-fee calculation rule.

18. An operation program of a leased-vehicle pooling system comprising an operation program readable and executable by a vehicle management server of the leased-vehicle pooling system, the vehicle management server being a computer, and the operation program readable and executable by the vehicle management server consisting of:
a vehicle running-related information acquisition step for acquiring vehicle running-related information including vehicle identification information of a leased vehicle, pooler identification information of either one of the two or more vehicle poolers of the leased vehicle, and vehicle running information of the leased vehicle;
a lease-fee calculation rule acquisition step for acquiring a lease-fee calculation rule; and
a lease-fee calculation step for calculating a lease fee to be charged to each of the poolers on the basis of the received running-related information and the acquired lease-fee calculation rule.
